# EUROPEAN PATENT SPECIFICATION

(11) **EP 2 993 933 B1**
(45) Date of publication and mention of the grant of the patent: **03.01.2018**
(21) Application number: 14753865.6
(22) Date of filing: 25.02.2014
(51) Int. Cl.: H04W 12/08, H04L 9/32, H04L 29/06, H04W 12/06, G09C 5/00, H04L 9/08, H04W 8/24, H04W 48/08

(54) **WIRELESS TERMINAL CONFIGURATION METHOD, APPARATUS AND WIRELESS TERMINAL**
KONFIGURATIONSVERFAHREN FÜR DRAHTLOSES ENDGERÄT, VORRICHTUNG UND DRAHTLOSES ENDGERÄT
MÉTHODE DE CONFIGURATION DE TERMINAL SANS FIL, APPAREIL ET TERMINAL SANS FIL

(30) Priority: 25.02.2013 CN 201310058832
(43) Date of publication of application: 09.03.2016
(73) Proprietor: Huawei Device (Dongguan) Co., Ltd., Dongguan, Guangdong 523808 (CN)
(72) Inventor: LI, Xiaoxian, Shenzhen Guangdong 518129 (CN); DING, Zhiming, Shenzhen Guangdong 518129 (CN)
(74) Representative: Kreuz, Georg Maria
(86) International application number: PCT/CN2014/072516
(87) International publication number: WO 2014/127751

(56) References cited:
- WO-A1-2014/031542
- WO-A1-2014/052031
- CN-A- 101 267 306
- CN-A- 102 088 700
- CN-A- 102 395 216
- KR-A- 20120 037 330

## Description

### TECHNICAL FIELD

Embodiments of the present invention relate to communications technologies, and in particular, to a wireless terminal configuration method, an apparatus, and a wireless terminal.

### BACKGROUND

With development of network technologies, wireless fidelity (Wireless Fidelity, Wi-Fi for short) networks become increasingly popular, and more wireless terminals are used.

To simplify a user's operation in setting up a wireless local area network (Wireless Local Area Network, WLAN for short), the Wi-Fi Alliance defines the Wi-Fi Protected Setup (Wi-Fi Protected Setup, WPS for short) specification, so that the user can conveniently set up the WLAN and configure a wireless terminal, and the wireless terminal acquires WLAN credentials and subsequently securely accesses the wireless local area network through a wireless access device. A WLAN having a wireless access device is referred to as an infrastructure network. In particular, after a simple modification is made to the current WPS specification, the WPS specification may be further used in a peer-to-peer (peer to peer, P2P for short) Wi-Fi network. In the P2P network technical specification released by the Wi-Fi Alliance, a P2P topology is a P2P workgroup including one group owner (Group Owner, GO for short) and multiple clients (Client) that are connected in a 1: n form, where n is an integer that is greater than or equal to 1. The group owner is equivalent to the wireless access device in the infrastructure network, and provides functions similar to those of a base station subsystem for the clients that are associated with the group owner. In addition, the group owner further has various functions of a registration apparatus in the WPS specification, and can perform a configuration process with the clients in the WPS specification to establish secure connections.

In the WPS specification, a most frequently used configuration mode is a personal identification number (Personal Identification Number, PIN for short) mode. When a wireless terminal accesses a wireless local area network (Wireless Local Area Network, WLAN for short) through a wireless access device, a user must first enter PIN information of the wireless terminal on a registration apparatus associated with the wireless access device. Then the wireless terminal acquires, by performing eight message exchange processes with the registration apparatus, configuration information that is provided by the registration apparatus, and finally the configuration of the wireless terminal by the registration apparatus is completed.

In the prior art, the user needs to enter an 8-digit PIN on the registration apparatus associated with the wireless access device, and the wireless terminal needs to perform eight message exchange processes with the registration apparatus before the configuration information is obtained. Consequently, the configuration process of the wireless terminal is too complex.

WO 2014031542 A1 discloses: An electronic device obtains a device password associated with the new enrollee device to be configured for a communication network. The device password is provided to a network registrar to cause the network registrar to configure the new enrollee device for the communication network. The network registrar performs an enrollment process based upon the device password and provides feedback to the electronic device to indicate whether or not the new enrollee device was successfully added to the communication network. Alternatively, when an electronic device detects the presence of a new enrollee device to be configured for the communication network, the electronic device generates a device password for the new enrollee device and provides the device password to the new enrollee device and to the network registrar, thereby causing the network registrar to initiate an enrollment process for the new enrollee device based upon the device password.

WO 2014052031 A1 discloses: Securely joining a secure wireless communications network is described, for example, where a printer or other device is securely added to a home wireless network. In various embodiments, a temporary wireless network is established between a new joiner device and a second wireless communications device which is already a member of a secure home wireless network. In an example, the temporary wireless network is set up using a secret key known to the new joiner device and the second wireless communications device by virtue of physical proximity. In various examples, the secure, temporary wireless network is used to transfer credentials of the secure home network to the new joiner device which then joins the home network. In an example the temporary wireless network is cancelled once the new joiner device becomes a member of the secure home (or other) wireless network.

### SUMMARY

Embodiments of the present invention provide a wireless terminal configuration method, an apparatus, and a wireless terminal to simplify a configuration process of a wireless terminal.

According to a first aspect, an embodiment of the present invention provides a wireless terminal configuration method, including:
scanning, by a registration apparatus, a multi-dimensional code of a wireless terminal to acquire multi-dimensional code information, where the multi-dimensional code information includes a configuration password of the wireless terminal; and
encrypting, by the registration apparatus, configuration information based on the configuration password, and sending the encrypted configuration information to the wireless terminal through a wireless access device associated with the registration apparatus, so that the wireless terminal accesses the wireless access device according to the configuration information.

With reference to the first aspect, in a first possible implementation manner of the first aspect, the encrypting, by the registration apparatus, configuration information based on the configuration password, and sending the encrypted configuration information to the wireless terminal through a wireless access device associated with the registration apparatus includes:
generating, by the registration apparatus, a first random nonce, sending the first random nonce to the wireless terminal through the wireless access device, and receiving a second random nonce that is sent by the wireless terminal through the wireless access device;
performing, by the registration apparatus, calculation on the first random nonce, the second random nonce, and the configuration password by using a first preset algorithm, to obtain a first key; and
encrypting, by the registration apparatus, the configuration information by using the first key, and sending the encrypted configuration information to the wireless terminal through the wireless access device.

With reference to the first aspect or the first possible implementation manner of the first aspect, in a second possible implementation manner of the first aspect, after the sending, by the registration apparatus, the encrypted configuration information to the wireless terminal through a wireless access device, the method further includes:
receiving, by the registration apparatus, a configuration completion confirmation message that is sent by the wireless terminal through the wireless access device.

With reference to the first aspect, in a third possible implementation manner of the first aspect, the encrypting, by the registration apparatus, configuration information based on the configuration password, and sending the encrypted configuration information to the wireless terminal through a wireless access device associated with the registration apparatus includes:
generating, by the registration apparatus, a third random nonce;
encrypting, by the registration apparatus, the third random nonce and the configuration information by using the configuration password; and
sending, by the registration apparatus, the third random nonce and the configuration information that are encrypted by the registration apparatus to the wireless terminal through the wireless access device.

With reference to the third possible implementation manner of the first aspect, in a fourth possible implementation manner of the first aspect, after the sending, by the registration apparatus, the encrypted configuration information to the wireless terminal through a wireless access device associated with the registration apparatus, the method further includes:
receiving, by the registration apparatus, the third random nonce that is encrypted by the wireless terminal and sent by the wireless terminal through the wireless access device;
decrypting, by the registration apparatus by using the configuration password, the third random nonce that is encrypted by the wireless terminal, to acquire the third random nonce; and
verifying, by the registration apparatus, whether the decrypted third random nonce is consistent with the third random nonce generated by the registration apparatus, and if consistent, sending a configuration completion confirmation message to the wireless terminal through the wireless access device.

With reference to the first aspect or any one of the first to fourth possible implementation manners of the first aspect, in a fifth possible implementation manner of the first aspect, the registration apparatus and the wireless access device are separately integrated into two independent devices, and the wireless access device is a wireless access point in an infrastructure-based wireless local area network.

With reference to the first aspect or any one of the first to fourth possible implementation manners of the first aspect, in a sixth possible implementation manner of the first aspect, the registration apparatus is integrated into the wireless access device, and the wireless access device is a wireless access point in an infrastructure-based wireless local area network.

With reference to the first aspect or any one of the first to fourth possible implementation manners of the first aspect, in a seventh possible implementation manner of the first aspect, the registration apparatus is integrated into the wireless access device, the wireless access device is a group owner in a non-infrastructure-based wireless local area network, and the wireless terminal is a client in the non-infrastructure-based wireless local area network.

With reference to the first aspect or any one of the first to seventh possible implementation manners of the first aspect, in an eighth possible implementation manner of the first aspect, before the scanning, by a registration apparatus, a multi-dimensional code of a wireless terminal to acquire multi-dimensional code information, the method further includes:
receiving, by the registration apparatus, a probe request message that is sent by the wireless terminal through the wireless access device, where the probe request message includes a device identifier of the wireless terminal and instruction information for instructing the registration apparatus to acquire the configuration password by scanning the multi-dimensional code; and
the scanning, by a registration apparatus, a multi-dimensional code of a wireless terminal to acquire multi-dimensional code information includes:
   identifying, by the registration apparatus, the wireless terminal by using the device identifier of the wireless terminal, and scanning the multi-dimensional code of the wireless terminal to acquire the multi-dimensional code information.

With reference to the first aspect or any one of the first to eighth possible implementation manners of the first aspect, in a ninth possible implementation manner of the first aspect, the multi-dimensional code information is dynamic multi-dimensional code information or static multi-dimensional code information.

According to a second aspect, an embodiment of the present invention provides a wireless terminal configuration method, including:
receiving, by a wireless terminal, configuration information that is encrypted based on a configuration password and sent by a registration apparatus through a wireless access device associated with the registration apparatus, where a multi-dimensional code is set in the wireless terminal, so that the registration apparatus scans the multi-dimensional code and acquires multi-dimensional code information, where the multi-dimensional code information includes the configuration password of the wireless terminal; and
decrypting, by the wireless terminal, the encrypted configuration information based on the configuration password to acquire the configuration information, and accessing the wireless access device according to the configuration information.

With reference to the second aspect, in a first possible implementation manner of the second aspect, the decrypting, by the wireless terminal, the encrypted configuration information based on the configuration password to acquire the configuration information includes:
generating, by the wireless terminal, a second random nonce, sending the second random nonce to the registration apparatus through the wireless access device, and receiving a first random nonce that is sent by the registration apparatus through the wireless access device;
performing, by the wireless terminal, calculation on the first random nonce, the second random nonce, and the configuration password by using a first preset algorithm, to obtain a first key; and
decrypting, by the wireless terminal, the encrypted configuration information by using the first key, to acquire the configuration information.

With reference to the second aspect or the first possible implementation manner of the second aspect, in a second possible implementation manner of the second aspect, after the wireless terminal acquires the configuration information, the method further includes:
sending, by the wireless terminal, a configuration completion confirmation message to the registration apparatus through the wireless access device.

With reference to the second aspect, in a third possible implementation manner of the second aspect, the receiving, by a wireless terminal, configuration information that is encrypted based on a configuration password and sent by a registration apparatus through a wireless access device associated with the registration apparatus includes:
receiving, by the wireless terminal, a third random nonce and the configuration information that are encrypted by the registration apparatus by using the configuration password and sent by the registration apparatus through the wireless access device, where the third random nonce is generated by the registration apparatus; and
the decrypting, by the wireless terminal, the encrypted configuration information based on the configuration password to acquire the configuration information includes:
   decrypting, by the wireless terminal by using the configuration password, the third random nonce and the configuration information that are encrypted by the registration apparatus, to acquire the third random nonce and the configuration information.

With reference to the third possible implementation manner of the second aspect, in a fourth possible implementation manner of the second aspect, after the wireless terminal acquires the configuration information, the method further includes:
encrypting, by the wireless terminal by using the configuration password, the third random nonce that is acquired through decryption, and sending the third random nonce encrypted by the wireless terminal to the registration apparatus through the wireless access device; and
receiving, by the wireless terminal, a configuration completion confirmation message that is sent by the registration apparatus through the wireless access device after the registration apparatus verifies that the decrypted third random nonce is consistent with the third random nonce generated by the registration apparatus, where the decrypted third random nonce is the third random nonce that is acquired by the registration apparatus after the third random nonce encrypted by the wireless terminal is decrypted by using the configuration password.

With reference to the second aspect or any one of the first to fourth possible implementation manners of the second aspect, in a fifth possible implementation manner of the second aspect, the registration apparatus and the wireless access device are separately integrated into two independent devices, and the wireless access device is a wireless access point in an infrastructure-based wireless local area network.

With reference to the second aspect or any one of the first to fourth possible implementation manners of the second aspect, in a sixth possible implementation manner of the second aspect, the registration apparatus is integrated into the wireless access device, and the wireless access device is a wireless access point in an infrastructure-based wireless local area network.

With reference to the second aspect or any one of the first to fourth possible implementation manners of the second aspect, in a seventh possible implementation manner of the second aspect, the registration apparatus is integrated into the wireless access device, the wireless access device is a group owner in a non-infrastructure-based wireless local area network, and the wireless terminal is a client in the non-infrastructure-based wireless local area network.

With reference to the second aspect or any one of the first to seventh possible implementation manners of the second aspect, in an eighth possible implementation manner of the second aspect, before the receiving, by a wireless terminal, configuration information that is encrypted based on a configuration password and sent by a registration apparatus through a wireless access device associated with the registration apparatus, the method further includes:
sending, by the wireless terminal, a probe request message to the registration apparatus through the wireless access device, where the probe request message includes a device identifier of the wireless terminal and instruction information for instructing the registration apparatus to acquire the configuration password by scanning the multi-dimensional code.

With reference to the second aspect or any one of the first to eighth possible implementation manners of the second aspect, in a ninth possible implementation manner of the second aspect, the multi-dimensional code information is dynamic multi-dimensional code information or static multi-dimensional code information.

According to a third aspect, an embodiment of the present invention provides a registration apparatus for configuring a wireless terminal, where the registration apparatus includes:
a scanning module, configured to scan a multi-dimensional code of the wireless terminal to acquire multi-dimensional code information, where the multi-dimensional code information includes a configuration password of the wireless terminal; and
a configuration information encryption module, configured to encrypt configuration information based on the configuration password, and send the encrypted configuration information to the wireless terminal through a wireless access device associated with the registration apparatus, so that the wireless terminal accesses the wireless access device according to the configuration information.

With reference to the third aspect, in a first possible implementation manner of the third aspect, the configuration information encryption module is specifically configured to:
generate a first random nonce, send the first random nonce to the wireless terminal through the wireless access device, and receive a second random nonce that is sent by the wireless terminal through the wireless access device;
perform calculation on the first random nonce, the second random nonce, and the configuration password by using a first preset algorithm, to obtain a first key; and
encrypt the configuration information by using the first key, and send the encrypted configuration information to the wireless terminal through the wireless access device.

With reference to the third aspect or the first possible implementation manner of the third aspect, in a second possible implementation manner of the third aspect, the apparatus further includes:
a message receiving module, configured to receive a configuration completion confirmation message that is sent by the wireless terminal through the wireless access device after the configuration information encryption module sends the encrypted configuration information to the wireless terminal through the wireless access device associated with the registration apparatus.

With reference to the third aspect, in a third possible implementation manner of the third aspect, the configuration information encryption module is specifically configured to:
generate a third random nonce;
encrypt the third random nonce and the configuration information by using the configuration password; and
send the third random nonce and the configuration information that are encrypted by the registration apparatus to the wireless terminal through the wireless access device.

With reference to the third possible implementation manner of the third aspect, in a fourth possible implementation manner of the third aspect, the apparatus further includes:
a random nonce receiving module, configured to receive the third random nonce that is encrypted by the wireless terminal and sent by the wireless terminal through the wireless access device after the configuration information encryption module sends the encrypted configuration information to the wireless terminal through the wireless access device associated with the registration apparatus;
a random nonce decryption module, configured to decrypt, by using the configuration password, the third random nonce that is encrypted by the wireless terminal, to acquire the third random nonce; and
a verification module, configured to verify whether the decrypted third random nonce is consistent with the third random nonce generated by the registration apparatus, and if consistent, send a configuration completion confirmation message to the wireless terminal through the wireless access device.

With reference to the third aspect or any one of the first to fourth possible implementation manners of the third aspect, in a fifth possible implementation manner of the third aspect, the registration apparatus and the wireless access device are separately integrated into two independent devices, and the wireless access device is a wireless access point in an infrastructure-based wireless local area network.

With reference to the third aspect or any one of the first to fourth possible implementation manners of the third aspect, in a sixth possible implementation manner of the third aspect, the registration apparatus is integrated into the wireless access device, and the wireless access device is a wireless access point in an infrastructure-based wireless local area network.

With reference to the third aspect or any one of the first to fourth possible implementation manners of the third aspect, in a seventh possible implementation manner of the third aspect, the registration apparatus is integrated into the wireless access device, the wireless access device is a group owner in a non-infrastructure-based wireless local area network, and the wireless terminal is a client in the non-infrastructure-based wireless local area network.

With reference to the third aspect or any one of the first to seventh possible implementation manners of the third aspect, in an eighth possible implementation manner of the third aspect, the apparatus further includes:
a request receiving module, configured to receive, before the scanning module scans the multi-dimensional code of the wireless terminal to acquire the multi-dimensional code information, a probe request message that is sent by the wireless terminal through the wireless access device, where the probe request message includes a device identifier of the wireless terminal and instruction information for instructing the registration apparatus to acquire the configuration password by scanning the multi-dimensional code; and
an identification module, configured to identify the wireless terminal by using the device identifier of the wireless terminal, and scan the multi-dimensional code of the wireless terminal to acquire the multi-dimensional code information.

With reference to the third aspect or any one of the first to eighth possible implementation manners of the third aspect, in a ninth possible implementation manner of the third aspect, the multi-dimensional code information is dynamic multi-dimensional code information or static multi-dimensional code information.

According to a fourth aspect, an embodiment of the present invention provides a wireless terminal, including:
an information receiving module, configured to receive configuration information that is encrypted based on a configuration password and sent by a registration apparatus through a wireless access device associated with the registration apparatus, where a multi-dimensional code is set in the wireless terminal, so that the registration apparatus scans the multi-dimensional code and acquires multi-dimensional code information, where the multi-dimensional code information includes the configuration password of the wireless terminal;
a configuration information decryption module, configured to decrypt the encrypted configuration information based on the configuration password to acquire the configuration information; and
an access module, configured to access the wireless access device according to the configuration information.

With reference to the fourth aspect, in a first possible implementation manner of the fourth aspect, the configuration information decryption module is specifically configured to:
generate a second random nonce, send the second random nonce to the registration apparatus through the wireless access device, and receive a first random nonce that is sent by the registration apparatus through the wireless access device;
perform calculation on the first random nonce, the second random nonce, and the configuration password by using a first preset algorithm, to obtain a first key; and
decrypt the encrypted configuration information by using the first key, to acquire the configuration information.

With reference to the fourth aspect or the first possible implementation manner of the fourth aspect, in a second possible implementation manner of the fourth aspect, the wireless terminal further includes:
a confirmation module, configured to send a configuration completion confirmation message to the registration apparatus through the wireless access device after the configuration information decryption module acquires the configuration information.

With reference to the fourth aspect, in a third possible implementation manner of the fourth aspect, the information receiving module is specifically configured to receive a third random nonce and the configuration information that are encrypted by the registration apparatus by using the configuration password and sent by the registration apparatus through the wireless access device, where the third random nonce is generated by the registration apparatus; and
the configuration information decryption module is specifically configured to decrypt, by using the configuration password, the third random nonce and the configuration information that are encrypted by the registration apparatus, to acquire the third random nonce and the configuration information.

With reference to the third possible implementation manner of the fourth aspect, in a fourth possible implementation manner of the fourth aspect, the wireless terminal further includes:
a random nonce encryption module, configured to: after the configuration information decryption module acquires the configuration information, encrypt, by using the configuration password, the third random nonce that is acquired by means of decryption, and send the third random nonce encrypted by the wireless terminal to the registration apparatus through the wireless access device; and
a confirmation receiving module, configured to receive a configuration completion confirmation message that is sent by the registration apparatus through the wireless access device after the registration apparatus verifies that the decrypted third random nonce is consistent with the third random nonce generated by the registration apparatus, where the decrypted third random nonce is the third random nonce that is acquired by the registration apparatus after the third random nonce encrypted by the wireless terminal is decrypted by using the configuration password.

With reference to the fourth aspect or any one of the first to fourth possible implementation manners of the fourth aspect, in a fifth possible implementation manner of the fourth aspect, the registration apparatus and the wireless access device are separately integrated into two independent devices, and the wireless access device is a wireless access point in an infrastructure-based wireless local area network.

With reference to the fourth aspect or any one of the first to fourth possible implementation manners of the fourth aspect, in a sixth possible implementation manner of the fourth aspect, the registration apparatus is integrated into the wireless access device, and the wireless access device is a wireless access point in an infrastructure-based wireless local area network.

With reference to the fourth aspect or any one of the first to fourth possible implementation manners of the fourth aspect, in a seventh possible implementation manner of the fourth aspect, the registration apparatus is integrated into the wireless access device, the wireless access device is a group owner in a non-infrastructure-based wireless local area network, and the wireless terminal is a client in the non-infrastructure-based wireless local area network.

With reference to the fourth aspect or any one of the first to seventh possible implementation manners of the fourth aspect, in an eighth possible implementation manner of the fourth aspect, the wireless terminal further includes:
a message sending module, configured to send a probe request message to the registration apparatus through the wireless access device before the information receiving module receives the configuration information that is encrypted based on the configuration password and sent by the registration apparatus through the wireless access device associated with the registration apparatus, where the probe request message includes a device identifier of the wireless terminal and instruction information for instructing the registration apparatus to acquire the configuration password by scanning the multi-dimensional code.

With reference to the fourth aspect or any one of the first to eighth possible implementation manners of the fourth aspect, in a ninth possible implementation manner of the fourth aspect, the multi-dimensional code information is dynamic multi-dimensional code information or static multi-dimensional code information.

The embodiments provide a wireless terminal configuration method, an apparatus, and a wireless terminal. In the method, a registration apparatus acquires a configuration password of a wireless terminal by scanning a multi-dimensional code of the wireless terminal, and does not require a manual input by a user on the registration apparatus; the registration apparatus encrypts configuration information based on the configuration password, and sends the encrypted configuration information to the wireless terminal through a wireless access device associated with the registration apparatus, so that the wireless terminal decrypts the encrypted configuration information to acquire the configuration information. Interaction processes between the wireless terminal and the registration apparatus are greatly reduced, and a configuration process of the wireless terminal is simplified.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of Embodiment 1 of a wireless terminal configuration method according to the present invention;
FIG. 2 is a flowchart of Embodiment 2 of a wireless terminal configuration method according to the present invention;
FIG. 3 is a flowchart of Embodiment 3 of a wireless terminal configuration method according to the present invention;
FIG. 4 is a signaling flowchart of Embodiment 4 of a wireless terminal configuration method according to the present invention;
FIG. 5 is a signaling flowchart of Embodiment 5 of a wireless terminal configuration method according to the present invention;
FIG. 6 is a signaling flowchart of Embodiment 6 of a wireless terminal configuration method according to the present invention;
FIG. 7 is a schematic diagram of a structure of Embodiment 1 of a registration apparatus for configuring a wireless terminal according to the present invention;
FIG. 8 is a schematic diagram of a structure of Embodiment 2 of a registration apparatus for configuring a wireless terminal according to the present invention;
FIG. 9 is a schematic diagram of a structure of Embodiment 3 of a registration apparatus for configuring a wireless terminal according to the present invention;
FIG. 10 is a schematic diagram of a structure of Embodiment 1 of a wireless terminal according to the present invention;
FIG. 11 is a schematic diagram of a structure of Embodiment 2 of a wireless terminal according to the present invention;
FIG. 12 is a schematic diagram of a structure of Embodiment 3 of a wireless terminal according to the present invention;
FIG. 13 is a schematic diagram of a structure of Embodiment 4 of a registration apparatus for configuring a wireless terminal according to the present invention; and
FIG. 14 is a schematic diagram of a structure of Embodiment 4 of a wireless terminal according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

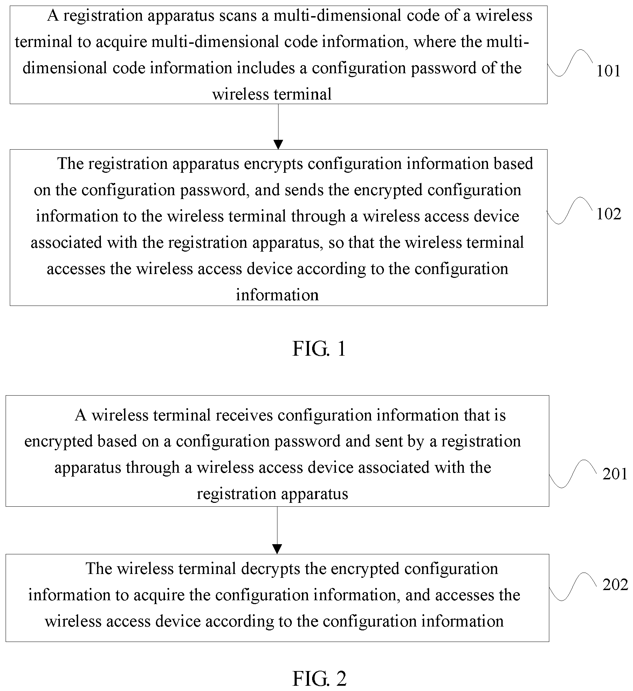

FIG. 1 is a flowchart of Embodiment 1 of a wireless terminal configuration method according to the present invention. The wireless terminal configuration method provided by this embodiment may be executed by an apparatus that executes the wireless terminal configuration method. The apparatus may be implemented by software and/or hardware. The apparatus further has a scanning function. The apparatus may be configured in a registration apparatus as an execution body, or may be a registration apparatus itself, where the registration apparatus may execute the wireless terminal configuration method in this embodiment. As shown in FIG. 1, the method in this embodiment may include:
Step 101: A registration apparatus scans a multi-dimensional code of a wireless terminal to acquire multi-dimensional code information, where the multi-dimensional code information includes a configuration password of the wireless terminal.
Step 102: The registration apparatus encrypts configuration information based on the configuration password, and sends the encrypted configuration information to the wireless terminal through a wireless access device associated with the registration apparatus, so that the wireless terminal accesses the wireless access device according to the configuration information.

In a specific implementation process, the wireless terminal configuration method provided by this embodiment may be specifically applied to two scenarios. One scenario is a wireless terminal configuration scenario in the WPS specification, and one scenario is a wireless terminal configuration scenario in the peer-to-peer (peer-to-peer, P2P for short) specification.

In the WPS specification, the registration apparatus in this embodiment may be a registration apparatus in the WPS specification, and is used to manage creation of a WLAN network, addition or removal of a wireless terminal. In a possible implementation manner, the registration apparatus and the wireless access device are separately integrated into two independent devices, and the wireless access device is a wireless access point in an infrastructure-based wireless local area network. For example, the registration apparatus may be integrated into an external device such as another wireless terminal or a computer, and the wireless access device may be integrated into a wireless switch or may be an independent device. In another possible implementation manner, the registration apparatus is integrated into the wireless access device, that is, built in the wireless access device, and the wireless access device is a wireless access point in an infrastructure-based wireless local area network. In the two possible implementation processes, the registration apparatus may manage the wireless access device, and may further discover a wireless terminal requesting to access the wireless access device, and send, to the wireless terminal, configuration information for accessing the wireless access device. The wireless access device is an infrastructure in the WLAN network, that is, an access point supporting the 802.11 protocol. In a specific implementation process, the registration apparatus sends the encrypted configuration information to the wireless terminal; after the wireless terminal acquires the correct configuration information, the configuration is completed, and the wireless terminal may subsequently access the wireless access device according to the configuration information.

The registration apparatus and the wireless access device in this embodiment are separately integrated into two independent devices. The registration apparatus may be integrated into another intelligent terminal, and the intelligent terminal is used to implement functions of the registration apparatus, so that the wireless access device may have only a wireless access function, achieving a simple design and a low cost. The registration apparatus in this embodiment may also be integrated into the wireless access device, so that the wireless access device has the functions of the registration apparatus, and therefore, no other device is required, which facilitates use by a user. Persons skilled in the art may understand that in a specific implementation process, an appropriate implementation manner may be selected according to an actual situation and respective advantages of the two implementation manners.

In the P2P specification, two wireless terminals are connected not by using a wireless access point; instead, a direct connection is established between the two wireless terminals. Specifically, in a process of interconnecting the two wireless terminals in the P2P specification, after the two wireless terminals discover each other, negotiation is performed according to calculation capabilities and bandwidths of the two wireless terminals and whether the two wireless terminals have a function of a wireless access device; finally, it is determined, according to a negotiation result, that one of the wireless terminals is a group owner in a non-infrastructure-based wireless local area network, and this wireless terminal is used as a wireless access device. Persons skilled in the art may understand that in this case, the wireless access device is the group owner in the non-infrastructure-based wireless local area network, while the other wireless terminal is a client in the non-infrastructure-based wireless local area network. Persons skilled in the art may understand that the two wireless terminals may be set to directly determine the group owner and the client. In particular, the registration apparatus is further integrated into the wireless access device. In a specific implementation process, the registration apparatus integrated into the wireless access device sends the encrypted configuration information to the client; after the client acquires the correct configuration information, the configuration is completed, and the client may subsequently access the group owner according to the configuration information. In this embodiment, the wireless access device is the group owner in the non-infrastructure-based wireless local area network, and the wireless terminal is the client in the non-infrastructure-based wireless local area network, so that the wireless terminal configuration method in this embodiment may be further applied to a scenario of the P2P specification to implement wireless terminal configuration in the P2P specification.

Persons skilled in the art may understand that a wireless local area network includes an infrastructure-based wireless local area network and a non-infrastructure-based wireless local area network. The infrastructure-based wireless local area network may specifically refer to a wireless local area network that has a wireless access point. The non-infrastructure-based wireless local area network may refer to a wireless local area network that does not have a wireless access point.

Therefore, it can be seen that the client in the P2P specification and the wireless terminal in the WPS specification are essentially the same, and are only different in names because of different scenarios. The wireless terminal hereinafter may not only be the wireless terminal in the WPS specification, but also be the client in the P2P specification. In addition, in the foregoing two scenarios, the registration apparatus sends the configuration information to the wireless terminal, so that the wireless terminal accesses the wireless access device. The specific process may include step 101 and step 102. The following describes step 101 and step 102 in detail.

In step 101, when a user of the wireless terminal needs to use the wireless terminal to join the wireless access device, the user of the wireless terminal triggers the registration apparatus to perform wireless terminal configuration. First, the wireless terminal provides the multi-dimensional code for the registration apparatus, and the registration apparatus scans the multi-dimensional code of the wireless terminal to acquire the multi-dimensional code information. The multi-dimensional code information may be static multi-dimensional code information or dynamic multi-dimensional code information. The multi-dimensional code information may be one-dimensional code information, two-dimensional code information, or three-dimensional code information. The multi-dimensional code information may include a large amount of information, and may specifically include information such as the configuration password and a wireless terminal identifier. The configuration password may be a key of 128 bits, 256 bits, or another length, or may be a 16-byte PIN key or character string password. Persons skilled in the art may understand that the configuration password obtained by scanning may be long, which makes it difficult to crack the configuration password by brute force, and ensures security of the configuration information.

In step 102, the registration apparatus encrypts the configuration information based on the configuration password. In a specific implementation process, the registration apparatus may encrypt the configuration information by directly using the configuration password, or may encrypt the configuration information by using a password derived from the configuration password, or may encrypt the configuration information by using the configuration password and a password derived from another random nonce. The configuration information includes information such as credentials generated by the registration apparatus. After the registration apparatus encrypts the configuration information, the registration apparatus sends the encrypted configuration information to the wireless terminal through the wireless access device associated with the registration apparatus. The wireless access device associated with the registration apparatus is a wireless access device managed by the registration apparatus. The registration apparatus first sends the encrypted configuration information to the wireless access device, and then the wireless access device forwards the encrypted configuration information to the wireless terminal. The wireless terminal may decrypt the encrypted configuration information by using the configuration password, to acquire the configuration information. After the wireless terminal acquires the configuration information, the configuration of the wireless terminal by the registration apparatus is completed, and then the wireless terminal accesses the wireless access device according to the credentials in the configuration information.

In the wireless terminal configuration method provided by this embodiment, a registration apparatus acquires a configuration password of a wireless terminal by scanning a multi-dimensional code of the wireless terminal, and does not require a manual input by a user on the registration apparatus; the registration apparatus encrypts configuration information based on the configuration password, and sends the encrypted configuration information to the wireless terminal through a wireless access device associated with the registration apparatus, so that the wireless terminal decrypts the encrypted configuration information to acquire the configuration information. Interaction processes between the wireless terminal and the registration apparatus are greatly reduced, and a configuration process of the wireless terminal is simplified.

FIG. 2 is a flowchart of Embodiment 2 of a wireless terminal configuration method according to the present invention. The wireless terminal configuration method provided by this embodiment may be executed by an apparatus that executes the wireless terminal configuration method. The apparatus may be implemented by software and/or hardware, and configured in a wireless terminal as an executor, where the wireless terminal may execute the wireless terminal configuration method in this embodiment. In this embodiment, on a basis of Embodiment 1, an operation process of a wireless terminal is described in detail. As shown in FIG. 2, the method in this embodiment may include:
Step 201: A wireless terminal receives configuration information that is encrypted based on a configuration password and sent by a registration apparatus through a wireless access device associated with the registration apparatus, where a multi-dimensional code is set in the wireless terminal, so that the registration apparatus scans the multi-dimensional code and acquires multi-dimensional code information, where the multi-dimensional code information includes the configuration password of the wireless terminal.
Step 202: The wireless terminal decrypts the encrypted configuration information to acquire the configuration information, and accesses the wireless access device according to the configuration information.

Persons skilled in the art may understand that an application scenario of step 201 and step 202 may also be a scenario in the WPS specification and a scenario in the P2P specification. The specific application scenario is not further described herein in this embodiment. Reference may be made to Embodiment 1.

In step 201, when a user of the wireless terminal needs to use the wireless terminal to join the wireless access device, the user of the wireless terminal triggers the registration apparatus to perform a wireless terminal configuration. In this case, the multi-dimensional code is set in the wireless terminal, so that the registration apparatus scans the multi-dimensional code to acquire the multi-dimensional code information. The multi-dimensional code information may be static or dynamic multi-dimensional code information. The static multi-dimensional code information may be generated when the wireless terminal is delivered from a factory, and is printed on an exterior of the wireless terminal or stored in the wireless terminal. The dynamic multi-dimensional code information may be multi-dimensional code information generated when the wireless terminal joins the wireless access device. The multi-dimensional code stored in the wireless terminal and the multi-dimensional code dynamically generated by the wireless terminal may be displayed to the registration apparatus through a display interface of the wireless terminal. The multi-dimensional code information includes information such as the configuration password of the wireless terminal and a wireless device identifier.

In step 201 and step 202, the wireless terminal receives the configuration information that is encrypted based on the configuration password and sent by the registration apparatus through the wireless access device associated with the registration apparatus; the wireless terminal decrypts the encrypted configuration information to acquire the configuration information. A person skilled in the art may understand that a decryption key used in this embodiment corresponds to an encryption key for encrypting the configuration information by the registration apparatus in Embodiment 1. Therefore, the decryption key is an encryption key based on the configuration password. After acquiring the configuration information, the wireless terminal may access the wireless access device according to credentials in the configuration information.

In the wireless terminal configuration method provided by this embodiment, a multi-dimensional code is set in a wireless terminal, so that a registration apparatus acquires a configuration password by scanning the multi-dimensional code and does not require a manual input to the registration apparatus; the wireless terminal receives configuration information that is encrypted based on the configuration password and sent by the registration apparatus through a wireless access device associated with the registration apparatus; the wireless terminal decrypts the encrypted configuration information to acquire the configuration information. A configuration process of the wireless terminal is simplified.

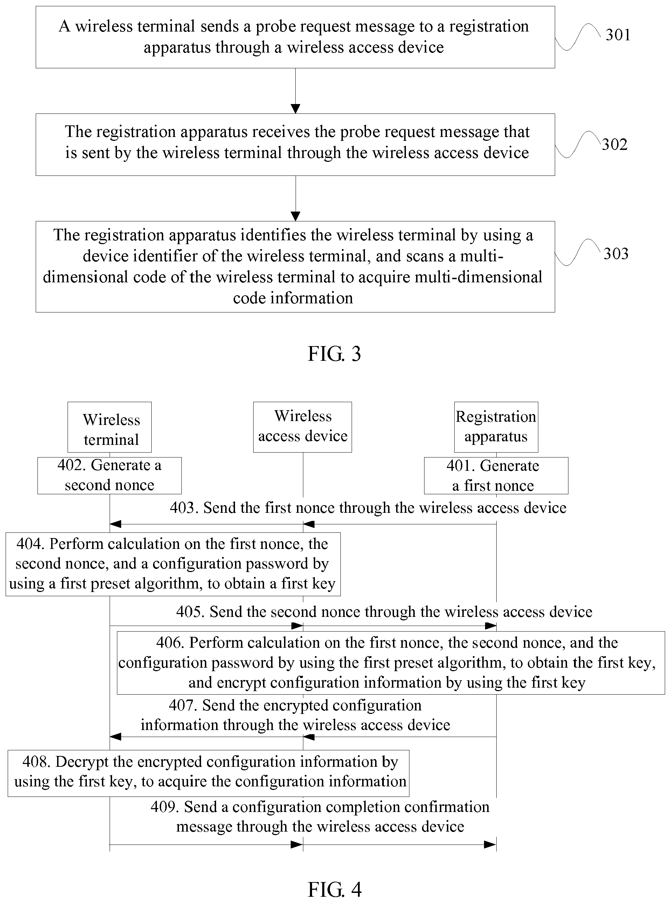

On a basis of Embodiment 1 and Embodiment 2, and in particular, in a wireless terminal configuration scenario in the WPS specification and the P2P specification, a wireless terminal configuration may be further triggered by a wireless terminal. A specific process may be shown in FIG. 3. FIG. 3 is a flowchart of Embodiment 3 of a wireless terminal configuration method according to the present invention. As shown in FIG. 3, the method in this embodiment may include:
Step 301: A wireless terminal sends a probe request message to a registration apparatus through a wireless access device.
Step 302: The registration apparatus receives the probe request message that is sent by the wireless terminal through the wireless access device.
Step 303: The registration apparatus identifies the wireless terminal by using a device identifier of the wireless terminal, and scans a multi-dimensional code of the wireless terminal to acquire multi-dimensional code information.

In a specific implementation process, the wireless access device sends a beacon frame to the wireless terminal in a broadcast mode; after receiving the beacon frame sent by the wireless access device, when the wireless terminal determines to access the wireless access device, the wireless terminal sends a probe request to the wireless access device; the wireless access device forwards the probe request to the registration apparatus (as shown in step 301). The probe request message includes the device identifier of the wireless terminal and instruction information for instructing the registration apparatus to acquire a configuration password by scanning.

In step 302, the registration apparatus receives the probe request message that is sent by the wireless terminal through the wireless access device, and obtains the device identifier of the wireless terminal. In step 303, the registration apparatus identifies the wireless terminal by using the device identifier of the wireless terminal, and scans the multi-dimensional code information of the wireless terminal. In a specific implementation process, the registration apparatus may further send a registration setup message to the wireless access device, where the registration setup message includes a message indicating that the wireless terminal has been registered; then the wireless access device sends the registration setup message to the wireless terminal by using a beacon frame.

Persons skilled in the art may understand that after step 303, steps in Embodiment 1 and Embodiment 2 may continue to be executed, which is not further described herein in this embodiment.

In the wireless terminal configuration method provided by this embodiment, a wireless terminal configuration is triggered by a wireless terminal, and no manual intervention is required, so that the wireless terminal can acquire configuration information by itself.

On a basis of Embodiment 1 to Embodiment 3, there are mainly two possible implementation manners in which a registration apparatus encrypts configuration information based on a configuration password, and sends the encrypted configuration information to a wireless terminal through a wireless access device associated with the registration apparatus, and the wireless terminal decrypts the encrypted configuration to acquire the configuration information. In one possible implementation manner, the wireless terminal obtains the configuration information by means of decryption, and determines that the configuration is completed. In the other possible implementation manner, the registration apparatus verifies that a random nonce returned by the wireless terminal is correct, and determines that the configuration is completed.

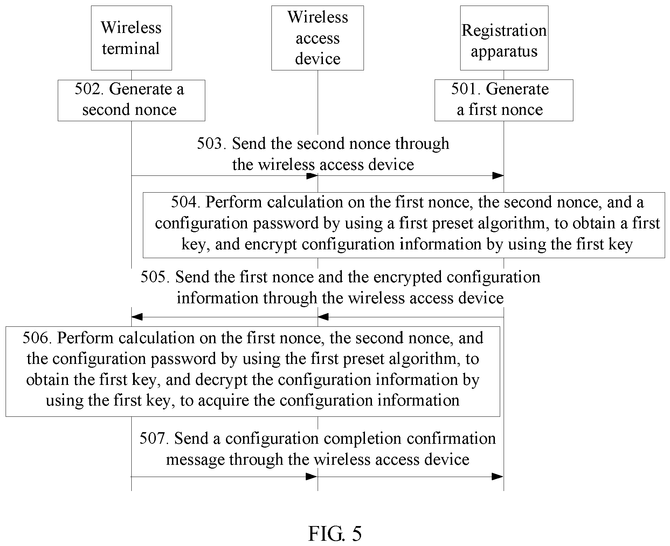

The possible implementation manner in which the wireless terminal determines that the configuration is completed may specifically include two cases. One case is shown in FIG. 4, and the other case is shown in FIG. 5.

FIG. 4 is a signaling flowchart of Embodiment 4 of a wireless terminal configuration method according to the present invention. As shown in FIG. 4, the method in this embodiment may include:
Step 401: A registration apparatus generates a first random nonce.
Step 402: A wireless terminal generates a second random nonce.
   Persons skilled in the art may understand that there is no strict time sequence relationship between step 401 and step 402. The first random nonce and the second random nonce may be numeric values randomly generated by the registration apparatus or the wireless terminal, or may be fresh nonces constructed in a manner, for example, values obtained by combining randomly generated numeric values and some fixed values.
Step 403: The registration apparatus sends the first random nonce to the wireless terminal through a wireless access device, where the first random nonce sent by the registration apparatus may not be encrypted, or may be the first random nonce encrypted by using a configuration password.
Step 404: The wireless terminal performs calculation on the first random nonce, the second random nonce, and a configuration password by using a first preset algorithm, to obtain a first key.
   In this embodiment, the first preset algorithm may be a hash algorithm, or the like. In an actual application process, an appropriate first preset algorithm may be selected according to difficulty levels and data security. A specific manner of selecting the first preset algorithm is not particularly limited herein in this embodiment.
Step 405: The wireless terminal sends the second random nonce to the registration apparatus through the wireless access device, where the second random nonce sent by the wireless terminal may not be encrypted, or may be the second random nonce encrypted by using the configuration password.
   Persons skilled in the art may understand that this step may occur before step 403 or step 404, which is not particularly limited herein in this embodiment.
Step 406: The registration apparatus performs calculation on the first random nonce, the second random nonce, and the configuration password by using the first preset algorithm, to obtain the first key, and encrypts configuration information by using the first key.
   Persons skilled in the art may understand that the first preset algorithm in this step and the first preset algorithm in step 404 need to be a same type of algorithm. The first key is a shared key between the registration apparatus and the wireless terminal.
Step 407: The registration apparatus sends the encrypted configuration information to the wireless terminal through the wireless access device.
Step 408: The wireless terminal decrypts the encrypted configuration information by using the first key, to acquire the configuration information.
   Because the configuration information is encrypted by the registration apparatus by using the first key, the wireless terminal decrypts the encrypted configuration information by using the first key, to acquire the configuration information. In addition, step 403 and step 404 can only be executed after step 402 and before step 408.
Step 409: The wireless terminal sends a configuration completion confirmation message to the registration apparatus through the wireless access device.

After both the wireless terminal and the registration apparatus confirm that the configuration is completed, the wireless terminal may access the wireless access device according to credentials in the configuration information.

In the wireless terminal configuration method provided by this embodiment, only four interaction processes are needed before a configuration process of a wireless terminal is completed, which greatly simplifies the configuration process. In addition, a registration apparatus and the wireless terminal perform calculation on a first random nonce, a second random nonce, and a configuration password by using a first preset algorithm, to obtain a first key, where security of the first key is high. The registration apparatus encrypts configuration information by using the first key, and the wireless terminal decrypts the configuration information by using the first key, to acquire the configuration information, which ensures security of the configuration process.

FIG. 5 is a signaling flowchart of Embodiment 5 of a wireless terminal configuration method according to the present invention. As shown in FIG. 5, the method in this embodiment may include:
Step 501: A registration apparatus generates a first random nonce.
Step 502: A wireless terminal generates a second random nonce.
   Persons skilled in the art may understand that there is no strict time sequence relationship between step 501 and step 502. The first random nonce and the second random nonce may be any string of numbers, letters, or symbols, or any combination thereof.
Step 503: The wireless terminal sends the second random nonce to the registration apparatus through a wireless access device, where the second random nonce sent by the wireless terminal may not be encrypted, or may be the second random nonce encrypted by using a configuration password.
Step 504: The registration apparatus performs calculation on the first random nonce, the second random nonce, and the configuration password by using a first preset algorithm, to obtain a first key, and encrypts configuration information by using the first key.
   In this embodiment, the first preset algorithm may be a hash algorithm, an algorithm derived from a hash algorithm, or any other algorithm, or the like. In an actual application process, an appropriate first preset algorithm may be selected according to difficulty levels and data security. A specific manner of selecting the first preset algorithm is not particularly limited herein in this embodiment.
Step 505: The registration apparatus sends the first random nonce and the encrypted configuration information to the wireless terminal through the wireless access device, where the first random nonce sent by the registration apparatus may not be encrypted, or may be the first random nonce encrypted by using the configuration password.
   In this step, the registration apparatus may send the first random nonce and the encrypted configuration information to the wireless access device simultaneously, which may simplify an interaction process between the registration apparatus and the wireless terminal.
Step 506: The wireless terminal performs calculation on the first random nonce, the second random nonce, and the configuration password by using the first preset algorithm, to obtain the first key, and decrypts the configuration information by using the first key, to acquire the configuration information.
   Persons skilled in the art may understand that the first preset algorithm in this step and the first preset algorithm in step 504 need to be a same type of algorithm. The first key is a shared key between the registration apparatus and the wireless terminal.
Step 507: The wireless terminal sends a configuration completion confirmation message to the registration apparatus through the wireless access device.

After both the wireless terminal and the registration apparatus confirm that the configuration is completed, the wireless terminal may access the wireless access device according to credentials in the configuration information.

In the wireless terminal configuration method provided by this embodiment, only three interaction processes are needed before a configuration process of a wireless terminal is completed, which greatly simplifies the configuration process. In addition, a registration apparatus and the wireless terminal perform calculation on a first random nonce, a second random nonce, and a configuration password by using a first preset algorithm, to obtain a first key, where security of the first key is high. The registration apparatus encrypts configuration information by using the first key, and the wireless terminal decrypts the configuration information by using the first key, to acquire the configuration information, which ensures security of the configuration process.

It can be known above that Embodiment 4 and Embodiment 5 of the present invention are essentially the same, and are only slightly different in the time sequence relationship between steps. Sending or receiving in each step may be implemented by sending or receiving a handshake message, where the handshake message may carry a sent random nonce or key or the like. In Embodiment 4, a 4-way handshake is needed between the registration apparatus and the wireless terminal. In Embodiment 5, a 3-way handshake is needed between the registration apparatus and the wireless terminal. Persons skilled in the art may understand that Embodiment 4 and Embodiment 5 are only exemplary embodiments. In a specific implementation process, there is no strict time sequence relationship between steps, so long as the following is implemented: the registration apparatus generates the first random nonce, sends the first random nonce to the wireless terminal through the wireless access device, and receives the second random nonce that is sent by the wireless terminal through the wireless access device; the wireless terminal generates the second random nonce, sends the second random nonce to the registration apparatus through the wireless access device, and receives the first random nonce that is sent by the registration apparatus through the wireless access device; and so long as the following is ensured: the wireless terminal and the registration apparatus can perform calculation on the first random nonce, the second random nonce, and the configuration password by using the first preset algorithm, to obtain the first key; the registration apparatus encrypts the configuration information by using the first key; and the wireless terminal decrypts the configuration information by using the first key, to acquire the configuration information.

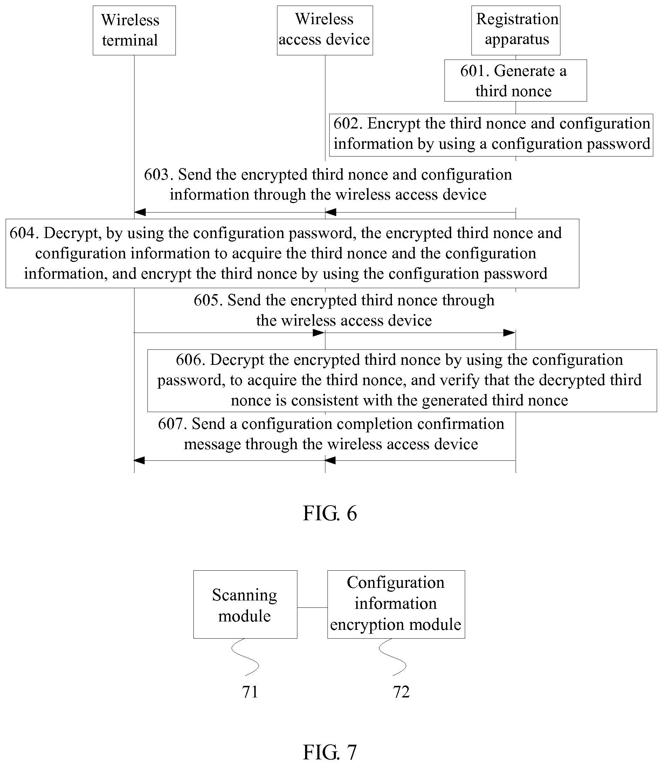

In the possible implementation manner in which the registration apparatus determines that the confirmation is completed, a specific process may be shown in FIG. 6.

FIG. 6 is a signaling flowchart of Embodiment 6 of a wireless terminal configuration method according to the present invention. As shown in FIG. 6, the method in this embodiment may include:
Step 601: A registration apparatus generates a third random nonce.
   The third random nonce may be a numeric value randomly generated by the registration apparatus, or may be a fresh nonce constructed in a manner, for example, a value obtained by combining randomly generated numeric values and some fixed values.
Step 602: The registration apparatus encrypts the third random nonce and configuration information by using a configuration password.
Step 603: The registration apparatus sends the encrypted third random nonce and configuration information to a wireless terminal through a wireless access device.
Step 604: The wireless terminal decrypts, by using the configuration password, the third random nonce and the configuration information that are encrypted by the registration apparatus, to acquire the third random nonce and the configuration information, and encrypts the third random nonce by using the configuration password.
Step 605: The wireless terminal sends the third random nonce encrypted by the wireless terminal to the registration apparatus through the wireless access device.
Step 606: The registration apparatus decrypts, by using the configuration password, the third random nonce encrypted by the wireless terminal, to acquire the third random nonce, and verifies that the third random nonce decrypted by the registration apparatus is consistent with the third random nonce generated by the registration apparatus.
   Persons skilled in the art may understand that in a specific implementation process, the registration apparatus receives encrypted third random nonces that are sent by multiple wireless terminals through a wireless access device, but a wireless terminal may send an incorrect third random nonce to the registration apparatus if a malicious attack occurs in a third random nonce transmission process or if the wireless terminal is not an owner of the configuration information. Therefore, for the registration apparatus, if the registration apparatus decrypts the third random nonce successfully and acquires the decrypted third random nonce and determines, by means of verification, that the decrypted third random nonce is consistent with the generated third random nonce, it indicates that the third random nonce is not maliciously attacked in the transmission process or that the wireless terminal is the real owner of the configuration information.
Step 607: The registration apparatus sends a configuration completion confirmation message to the wireless terminal through the wireless access device.

In this embodiment, completion of the configuration is determined mainly by means of a verification process performed by the registration apparatus. In the wireless terminal configuration method provided by this embodiment, only three interaction processes are needed before a configuration process of a wireless terminal is completed, which greatly simplifies the configuration process. In addition, a registration apparatus generates a third random nonce, and sends the third random nonce and configuration information that are encrypted by using a configuration password to the wireless terminal; the wireless terminal decrypts the third random nonce and the configuration information by using the configuration password, and returns the third random nonce encrypted by using the configuration password to the registration apparatus; and the registration apparatus verifies that the third random nonce obtained by means of decryption is consistent with the generated third random nonce, and determines that the configuration is completed, thereby ensuring security of the configuration process.

In each interaction process in Embodiment 4 to Embodiment 6, each network element may be identified by using an identifier of the network element. The identifier of each network element may be specifically a media access control (Media Access Control, MAC for short) address of each network element. A specific identification process is not further described herein in this embodiment.

In conclusion, persons skilled in the art may understand that Embodiment 4 to Embodiment 6 may be understood as an authentication process. When a wireless terminal is acquiring configuration information, this authentication process is performed synchronously. When the authentication succeeds, the wireless terminal acquires the correct configuration information. Therefore, while security is ensured by using a configuration password, the configuration process in which the wireless terminal acquires the correct configuration information is simplified.

FIG. 7 is a schematic diagram of a structure of Embodiment 1 of a registration apparatus for configuring a wireless terminal according to the present invention. As shown in FIG. 7, in this embodiment, the registration apparatus for configuring a wireless terminal includes a scanning module 71 and a configuration information encryption module 72.

The scanning module 71 is configured to scan a multi-dimensional code of the wireless terminal to acquire multi-dimensional code information, where the multi-dimensional code information includes a configuration password of the wireless terminal.

The configuration information encryption module 72 is configured to encrypt configuration information based on the configuration password, and send the encrypted configuration information to the wireless terminal through a wireless access device associated with the registration apparatus, so that the wireless terminal accesses the wireless access device according to the configuration information.

The registration apparatus for configuring a wireless terminal in this embodiment may be used to execute the technical solution of Embodiment 1 of the wireless terminal configuration method according to the present invention. The implementation principle and technical effect thereof are similar, and are not further described herein.

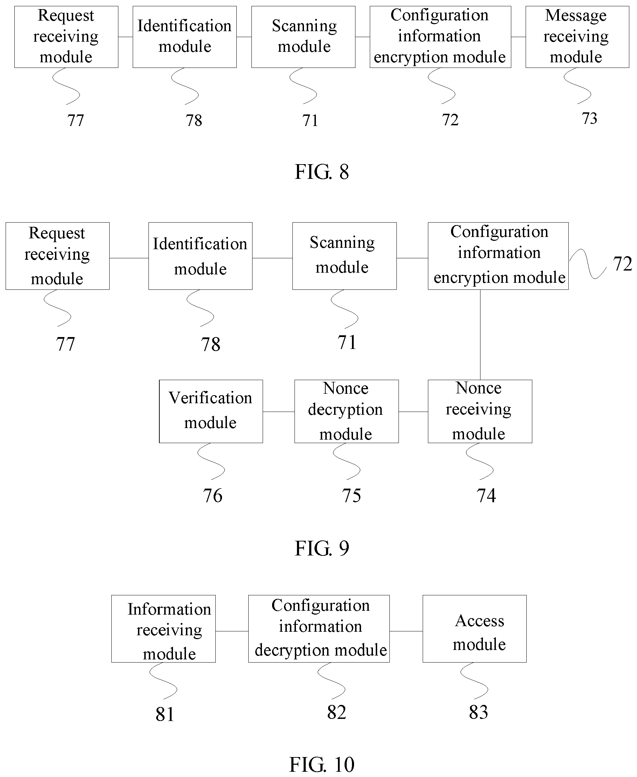

FIG. 8 is a schematic diagram of a structure of Embodiment 2 of a registration apparatus for configuring a wireless terminal according to the present invention. As shown in FIG. 8, on a basis of Embodiment 1 of the registration apparatus for configuring a wireless terminal according to the present invention, in this embodiment, the configuration information encryption module 72 is specifically configured to:
generate a first random nonce, send the first random nonce to the wireless terminal through the wireless access device, and receive a second random nonce that is sent by the wireless terminal through the wireless access device;
perform calculation on the first random nonce, the second random nonce, and the configuration password by using a first preset algorithm, to obtain a first key; and
encrypt the configuration information by using the first key, and send the encrypted configuration information to the wireless terminal through the wireless access device.

The apparatus further includes a message receiving module 73, configured to receive a configuration completion confirmation message that is sent by the wireless terminal through the wireless access device after the configuration information encryption module sends the encrypted configuration information to the wireless terminal through the wireless access device associated with the registration apparatus.

The registration apparatus for configuring a wireless terminal in this embodiment may be used to execute the technical solution of Embodiment 4 or Embodiment 5 of the wireless terminal configuration method. The implementation principle and technical effect thereof are similar, and are not further described herein.

FIG. 9 is a schematic diagram of a structure of Embodiment 3 of a registration apparatus for configuring a wireless terminal according to the present invention. As shown in FIG. 9, on a basis of Embodiment 1 of the registration apparatus for configuring a wireless terminal according to the present invention, in this embodiment, the configuration information encryption module 72 is specifically configured to:
generate a third random nonce;
encrypt the third random nonce and the configuration information by using the configuration password; and
send the third random nonce and the configuration information that are encrypted by the registration apparatus to the wireless terminal through the wireless access device.

The apparatus further includes:
a random nonce receiving module 74, configured to receive the third random nonce that is encrypted by the wireless terminal and sent by the wireless terminal through the wireless access device after the configuration information encryption module sends the encrypted configuration information to the wireless terminal through the wireless access device associated with the registration apparatus;
a random nonce decryption module 75, configured to decrypt, by using the configuration password, the third random nonce that is encrypted by the wireless terminal, to acquire the third random nonce; and
a verification module 76, configured to verify whether the decrypted third random nonce is consistent with the third random nonce generated by the registration apparatus, and if consistent, send a configuration completion confirmation message to the wireless terminal through the wireless access device.

The registration apparatus for configuring a wireless terminal in this embodiment may be used to execute the technical solution of Embodiment 6 of the wireless terminal configuration method according to the present invention. The implementation principle and technical effect thereof are similar, and are not further described herein.

On a basis of Embodiment 1 to Embodiment 3 of the registration apparatus for configuring a wireless terminal according to the present invention, optionally, the registration apparatus and the wireless access device are separately integrated into two independent devices, and the wireless access device is a wireless access point in an infrastructure-based wireless local area network.

Optionally, the registration apparatus is integrated into the wireless access device, and the wireless access device is a wireless access point in an infrastructure-based wireless local area network.

Optionally, the registration apparatus is integrated into the wireless access device, the wireless access device is a group owner in a non-infrastructure-based wireless local area network, and the wireless terminal is a client in the non-infrastructure-based wireless local area network.

On a basis of Embodiment 1 to Embodiment 3 of the registration apparatus for configuring a wireless terminal according to the present invention, the apparatus provided by this embodiment further includes a request receiving module 77 and an identification module 78.

The request receiving module 77 is configured to receive, before the scanning module scans the multi-dimensional code of the wireless terminal to acquire the multi-dimensional code information, a probe request message that is sent by the wireless terminal through the wireless access device, where the probe request message includes a device identifier of the wireless terminal and instruction information for instructing the registration apparatus to acquire the configuration password by scanning.

The identification module 78 is configured to identify the wireless terminal by using the device identifier of the wireless terminal, and scan the multi-dimensional code information of the wireless terminal.

Optionally, the multi-dimensional code information is dynamic multi-dimensional code information or static multi-dimensional code information.

The registration apparatus for configuring a wireless terminal in this embodiment may be used to execute the technical solution of the wireless terminal configuration method provided by any embodiment of the present invention. The implementation principle and technical effect thereof are similar, and are not further described herein.

FIG. 10 is a schematic diagram of a structure of Embodiment 1 of a wireless terminal according to the present invention. The wireless terminal provided by this embodiment may be configured in a wireless terminal. As shown in FIG. 10, the wireless terminal in this embodiment includes an information receiving module 81, a configuration information decryption module 82, and an access module 83.

The information receiving module 81 is configured to receive configuration information that is encrypted based on a configuration password and sent by a registration apparatus through a wireless access device associated with the registration apparatus, where a multi-dimensional code is set in the wireless terminal, so that the registration apparatus scans the multi-dimensional code and acquires multi-dimensional code information, where the multi-dimensional code information includes the configuration password of the wireless terminal.

The configuration information decryption module 82 is configured to decrypt the encrypted configuration information based on the configuration password to acquire the configuration information.

The access module 83 is configured to access the wireless access device according to the configuration information.

The wireless terminal in this embodiment may be used to execute the technical solution of Embodiment 2 of the wireless terminal configuration method according to the present invention. The implementation principle and technical effect thereof are similar, and are not further described herein.

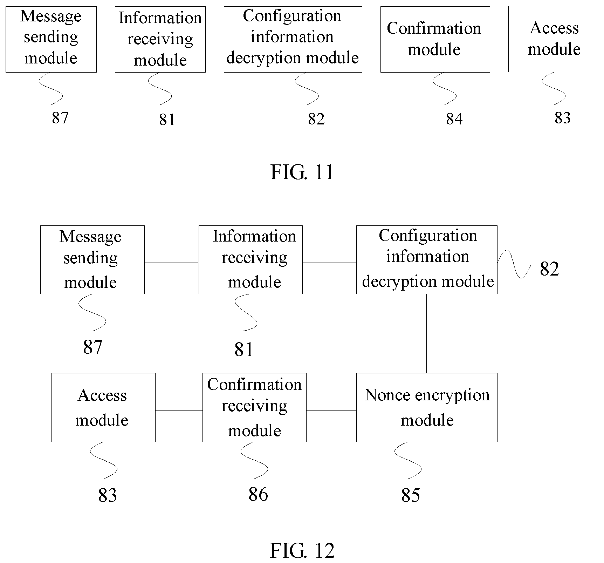

FIG. 11 is a schematic diagram of a structure of Embodiment 2 of a wireless terminal according to the present invention. On a basis of Embodiment 1 of the wireless terminal according to the present invention, in this embodiment, the configuration information decryption module 82 is specifically configured to:
generate a second random nonce, send the second random nonce to the registration apparatus through the wireless access device, and receive a first random nonce that is sent by the registration apparatus through the wireless access device;
perform calculation on the first random nonce, the second random nonce, and the configuration password by using a first preset algorithm, to obtain a first key; and
decrypt the encrypted configuration information by using the first key, to acquire the configuration information.

Optionally, the wireless terminal further includes a confirmation module 84, configured to send a configuration completion confirmation message to the registration apparatus through the wireless access device after the configuration information decryption module acquires the configuration information.

The wireless terminal in this embodiment may be used to execute the technical solution of Embodiment 4 or 5 of the wireless terminal configuration method according to the present invention. The implementation principle and technical effect thereof are similar, and are not further described herein.

FIG. 12 is a schematic diagram of a structure of Embodiment 3 of a wireless terminal according to the present invention. On a basis of Embodiment 1 of the wireless terminal according to the present invention, in this embodiment, the information receiving module 81 is specifically configured to receive a third random nonce and the configuration information that are encrypted by the registration apparatus by using the configuration password and sent by the registration apparatus through the wireless access device, where the third random nonce is generated by the registration apparatus.

The configuration information decryption module 82 is specifically configured to decrypt, by using the configuration password, the third random nonce and the configuration information that are encrypted by the registration apparatus, to acquire the third random nonce and the configuration information.

Optionally, the wireless terminal further includes:
a random nonce encryption module 85, configured to: after the configuration information decryption module acquires the configuration information, encrypt, by using the configuration password, the third random nonce that is acquired by means of decryption, and send the third random nonce encrypted by the wireless terminal to the registration apparatus through the wireless access device; and
a confirmation receiving module 86, configured to receive a configuration completion confirmation message that is sent by the registration apparatus through the wireless access device after the registration apparatus verifies that the decrypted third random nonce is consistent with the third random nonce generated by the registration apparatus, where the decrypted third random nonce is the third random nonce that is acquired by the registration apparatus after the third random nonce encrypted by the wireless terminal is decrypted by using the configuration password.

The wireless terminal in this embodiment may be used to execute the technical solution of Embodiment 6 of the wireless terminal configuration method according to the present invention. The implementation principle and technical effect thereof are similar, and are not further described herein.

On a basis of Embodiment 1 to Embodiment 3 of the wireless terminal according to the present invention, optionally, the registration apparatus and the wireless access device are separately integrated into two independent devices, and the wireless access device is a wireless access point in an infrastructure-based wireless local area network.

Optionally, the registration apparatus is integrated into the wireless access device, and the wireless access device is a wireless access point in an infrastructure-based wireless local area network.

Optionally, the registration apparatus is integrated into the wireless access device, the wireless access device is a group owner in a non-infrastructure-based wireless local area network, and the wireless terminal is a client in the non-infrastructure-based wireless local area network.

On a basis of Embodiment 1 to Embodiment 3 of the wireless terminal according to the present invention, in this embodiment, the wireless terminal further includes a message sending module 87, configured to send a probe request message to the registration apparatus through the wireless access device before the information receiving module receives the configuration information that is encrypted based on the configuration password and sent by the registration apparatus through the wireless access device associated with the registration apparatus, where the probe request message includes a device identifier of the wireless terminal and instruction information for instructing the registration apparatus to acquire the configuration password by scanning the multi-dimensional code.

The wireless terminal in this embodiment may be used to execute the technical solution of the wireless terminal configuration method provided by any embodiment of the present invention. The implementation principle and technical effect thereof are similar, and are not further described herein.

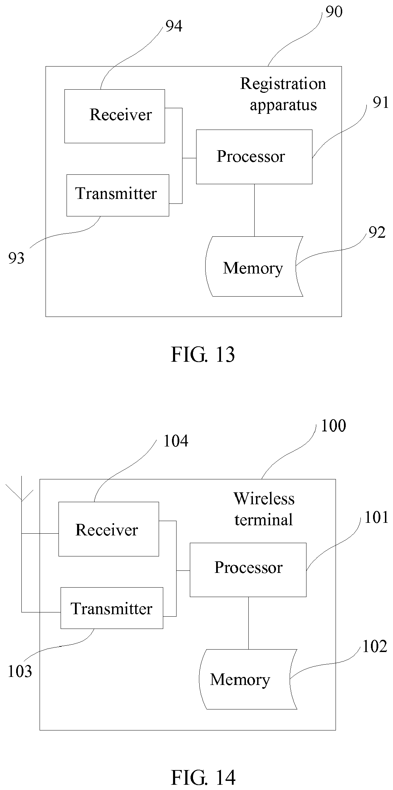

FIG. 13 is a schematic diagram of a structure of Embodiment 4 of a registration apparatus for configuring a wireless terminal according to the present invention. As shown in FIG. 13, a registration apparatus 90 in this embodiment may include a processor 91 and a memory 92. The registration apparatus 90 may further include a transmitter 93 and a receiver 94. The transmitter 93 and the receiver 94 may be connected to the processor 91. The memory 92 stores an execution instruction. When the registration apparatus 90 runs, the processor 91 communicates with the memory 92, and the processor 91 invokes the execution instruction in the memory 92, and is configured to execute an operation of the registration apparatus in any one of Embodiment 1 to Embodiment 6 of the wireless terminal configuration method.

FIG. 14 is a schematic diagram of a structure of Embodiment 4 of a wireless terminal according to the present invention. As shown in FIG. 14, a wireless terminal 100 in this embodiment may include a processor 101 and a memory 102. The wireless terminal 100 may further include a transmitter 103 and a receiver 104. In particular, the wireless terminal 100 may further include a display configured to display a multi-dimensional code. The transmitter 103 and the receiver 104 may be connected to the processor 101. The memory 102 stores an execution instruction. When the wireless terminal 100 runs, the processor 101 communicates with the memory 102, and the processor 101 invokes the execution instruction in the memory 102, and is configured to execute an operation of the wireless terminal in any one of Embodiment 1 to Embodiment 6 of the wireless terminal configuration method.

In the several embodiments provided in the present application, it should be understood that the disclosed apparatus and method may be implemented in other manners. For example, the described apparatus embodiment is merely exemplary. For example, the unit or module division is merely logical function division and may be other division in actual implementation. For example, a plurality of units or modules may be combined or integrated into another system, or some features may be ignored or not performed. In addition, the displayed or discussed mutual couplings or direct couplings or communication connections may be implemented by using some interfaces. The indirect couplings or communication connections between the apparatuses or modules may be implemented in electronic, mechanical, or other forms.

The modules described as separate parts may or may not be physically separate, and parts displayed as modules may or may not be physical modules, may be located in one position, or may be distributed on a plurality of network units. Some or all of the modules may be selected according to actual requirements to achieve the objectives of the solutions of the embodiments.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A wireless terminal configuration method, comprising:
scanning, by a registration apparatus, a multi-dimensional code of a wireless terminal to acquire multi-dimensional code information, wherein the multi-dimensional code information comprises a configuration password of the wireless terminal; and
encrypting, by the registration apparatus, configuration information based on the configuration password, and sending the encrypted configuration information to the wireless terminal by using a wireless access device associated with the registration apparatus, so that the wireless terminal accesses the wireless access device according to the configuration information;
**characterized in that** the encrypting, by the registration apparatus, configuration information based on the configuration password, and sending the encrypted configuration information to the wireless terminal through a wireless access device associated with the registration apparatus comprises:
generating, by the registration apparatus, a first random nonce, sending the first random nonce to the wireless terminal through the wireless access device, and receiving a second random nonce that is sent by the wireless terminal through the wireless access device;
obtaining, by the registration apparatus, a first key by using a first preset algorithm based on the first random nonce, the second random nonce, and the configuration password; and
encrypting, by the registration apparatus, the configuration information by using the first key, and sending the encrypted configuration information to the wireless terminal through the wireless access device.

2. The method according to claim 1, wherein the registration apparatus and the wireless access device are separately integrated into two independent devices, and the wireless access device is a wireless access point in an infrastructure-based wireless local area network.

3. The method according to claim 1, wherein the registration apparatus is integrated into the wireless access device, and the wireless access device is a wireless access point in an infrastructure-based wireless local area network.

4. The method according to claim 1, wherein the registration apparatus is integrated into the wireless access device, the wireless access device is a group owner in a non-infrastructure-based wireless local area network, and the wireless terminal is a client in the non-infrastructure-based wireless local area network.

5. The method according to any one of claims 1 to 4, wherein before the scanning, by a registration apparatus, a multi-dimensional code of a wireless terminal to acquire multi-dimensional code information, the method further comprises:
receiving, by the registration apparatus, a probe request message that is sent by the wireless terminal through the wireless access device, wherein the probe request message comprises a device identifier of the wireless terminal and instruction information for instructing the registration apparatus to acquire the configuration password by scanning the multi-dimensional code; and
the scanning, by a registration apparatus, a multi-dimensional code of a wireless terminal to acquire multi-dimensional code information comprises:
identifying, by the registration apparatus, the wireless terminal by using the device identifier of the wireless terminal, and scanning the multi-dimensional code of the wireless terminal to acquire the multi-dimensional code information.

6. A wireless terminal configuration method, comprising:
receiving, by a wireless terminal, configuration information that is encrypted based on a configuration password and sent by a registration apparatus through a wireless access device associated with the registration apparatus, wherein a multi-dimensional code is set in the wireless terminal, so that the registration apparatus scans the multi-dimensional code and acquires multi-dimensional code information, wherein the multi-dimensional code information comprises the configuration password of the wireless terminal; and
decrypting, by the wireless terminal, the encrypted configuration information based on the configuration password to acquire the configuration information, and accessing the wireless access device according to the configuration information;
**characterized in that** the decrypting, by the wireless terminal, the encrypted configuration information based on the configuration password to acquire the configuration information comprises:
generating, by the wireless terminal, a second random nonce, sending the second random nonce to the registration apparatus through the wireless access device, and receiving a first random nonce that is sent by the registration apparatus through the wireless access device;
obtaining, by the wireless terminal, a first key by using a first preset algorithm based on the first random nonce, the second random nonce, and the configuration password; and
decrypting, by the wireless terminal, the encrypted configuration information by using the first key, to acquire the configuration information.

7. The method according to claim 6, wherein before the receiving, by a wireless terminal, configuration information that is encrypted based on a configuration password and sent by a registration apparatus through a wireless access device associated with the registration apparatus, the method further comprises:
sending, by the wireless terminal, a probe request message to the registration apparatus through the wireless access device, wherein the probe request message comprises a device identifier of the wireless terminal and instruction information for instructing the registration apparatus to acquire the configuration password by scanning the multi-dimensional code.

8. A registration apparatus for configuring a wireless terminal, comprising:
a scanning module, configured to scan a multi-dimensional code of the wireless terminal to acquire multi-dimensional code information, wherein the multi-dimensional code information comprises a configuration password of the wireless terminal; and
a configuration information encryption module, configured to encrypt configuration information based on the configuration password, and send the encrypted configuration information to the wireless terminal through a wireless access device associated with the registration apparatus, so that the wireless terminal accesses the wireless access device according to the configuration information;
**characterized in that** the configuration information encryption module is specifically configured to:
generate a first random nonce, send the first random nonce to the wireless terminal through the wireless access device, and receive a second random nonce that is sent by the wireless terminal through the wireless access device;
obtain a first key by using a first preset algorithm based on the first random nonce, the second random nonce, and the configuration password; and
encrypt the configuration information by using the first key, and send the encrypted configuration information to the wireless terminal through the wireless access device.

9. The apparatus according to claim 8, wherein the apparatus further comprises:
a request receiving module, configured to receive, before the scanning module scans the multi-dimensional code of the wireless terminal to acquire the multi-dimensional code information, a probe request message that is sent by the wireless terminal through the wireless access device, wherein the probe request message comprises a device identifier of the wireless terminal and instruction information for instructing the registration apparatus to acquire the configuration password by scanning the multi-dimensional code; and
an identification module, configured to identify the wireless terminal by using the device identifier of the wireless terminal, and scan the multi-dimensional code of the wireless terminal to acquire the multi-dimensional code information.

10. A wireless terminal, comprising:
an information receiving module, configured to receive configuration information that is encrypted based on a configuration password and sent by a registration apparatus through a wireless access device associated with the registration apparatus, wherein a multi-dimensional code is set in the wireless terminal, so that the registration apparatus scans the multi-dimensional code and acquires multi-dimensional code information, wherein the multi-dimensional code information comprises the configuration password of the wireless terminal;
a configuration information decryption module, configured to decrypt the encrypted configuration information based on the configuration password to acquire the configuration information; and
an access module, configured to access the wireless access device according to the configuration information;
**characterized in that** the configuration information decryption module is specifically configured to:
generate a second random nonce, send the second random nonce to the registration apparatus through the wireless access device, and receive a first random nonce that is sent by the registration apparatus through the wireless access device;
obtain a first key by using a first preset algorithm based on the first random nonce, the second random nonce, and the configuration password; and
decrypt the encrypted configuration information by using the first key, to acquire the configuration information.

11. The wireless terminal according to claim 10, wherein the wireless terminal further comprises:
a message sending module, configured to send a probe request message to the registration apparatus through the wireless access device before the information receiving module receives the configuration information that is encrypted based on the configuration password and sent by the registration apparatus through the wireless access device associated with the registration apparatus, wherein the probe request message comprises a device identifier of the wireless terminal and instruction information for instructing the registration apparatus to acquire the configuration password by scanning the multi-dimensional code.

## Patentansprüche

1. Verfahren zum Konfigurieren eines drahtlosen Endgeräts, umfassend:
Abtasten eines mehrdimensionalen Codes eines drahtlosen Endgeräts durch eine Registriervorrichtung, um Informationen des mehrdimensionalen Codes zu erlangen, wobei die Informationen des mehrdimensionalen Codes ein Konfigurationspasswort des drahtlosen Endgeräts umfassen; und
Verschlüsseln von Konfigurationsinformationen durch die Registriervorrichtung auf der Grundlage des Konfigurationspassworts, und Senden der verschlüsselten Konfigurationsinformationen an das drahtlose Endgerät, indem eine drahtlose Zugangsvorrichtung verwendet wird, die der Registriervorrichtung zugeordnet ist, sodass das drahtlose Endgerät gemäß den Konfigurationsinformationen auf die drahtlose Zugangsvorrichtung zugreift;
**dadurch gekennzeichnet, dass** das Verschlüsseln der Konfigurationsinformationen durch die Registriervorrichtung auf der Grundlage des Konfigurationspassworts und das Senden der verschlüsselten Konfigurationsinformationen an das drahtlose Endgerät durch eine drahtlose Zugangsvorrichtung, die der Registriervorrichtung zugeordnet ist, umfassen:
Erzeugen einer ersten einmalig verwendeten Zufallszahl durch die Registriervorrichtung, Senden der ersten einmalig verwendeten Zufallszahl durch die drahtlose Zugangsvorrichtung an das drahtlose Endgerät, und Empfangen einer zweiten einmalig verwendeten Zufallszahl, die von dem drahtlosen Endgerät durch die drahtlose Zugangsvorrichtung gesendet wird;
Erhalten eines ersten Schlüssels in der Registriervorrichtung, indem ein erster voreingestellter Algorithmus verwendet wird, der auf der ersten einmalig verwendeten Zufallszahl, der zweiten einmalig verwendeten Zufallszahl und dem Konfigurationspasswort beruht; und
Verschlüsseln der Konfigurationsinformationen durch die Registriervorrichtung, indem der erste Schlüssel verwendet wird, und Senden der verschlüsselten Konfigurationsinformationen durch die drahtlose Zugangsvorrichtung an das drahtlose Endgerät.

2. Verfahren nach Anspruch 1, wobei die Registriervorrichtung und die drahtlose Zugangsvorrichtung getrennt in zwei unabhängige Vorrichtungen integriert sind, und wobei die drahtlose Zugangsvorrichtung ein drahtloser Zugangspunkt in einem infrastrukturbasierten drahtlosen lokalen Netzwerk ist.

3. Verfahren nach Anspruch 1, wobei die Registriervorrichtung in die drahtlose Zugangsvorrichtung integriert ist, und wobei die drahtlose Zugangsvorrichtung ein drahtloser Zugangspunkt in einem infrastrukturbasierten drahtlosen lokalen Netzwerk ist.

4. Verfahren nach Anspruch 1, wobei die Registriervorrichtung in die drahtlose Zugangsvorrichtung integriert ist, wobei die drahtlose Zugangsvorrichtung ein Gruppeneigentümer in einem nichtinfrastrukturbasierten drahtlosen lokalen Netzwerk ist, und wobei das drahtlose Endgerät ein Client in einem nichtinfrastrukturbasierten drahtlosen lokalen Netzwerk ist.

5. Verfahren nach einem der Ansprüche 1 bis 4, wobei das Verfahren vor dem Abtasten eines mehrdimensionalen Codes eines drahtlosen Endgeräts durch eine Registriervorrichtung, um Informationen des mehrdimensionalen Codes zu erlangen, außerdem umfasst:
Empfangen in der Registriervorrichtung einer Probeanfragenachricht, die von dem drahtlosen Endgerät durch die drahtlose Zugangsvorrichtung gesendet wird, wobei die Probeanfragenachricht eine Vorrichtungskennung des drahtlosen Endgeräts und Befehlsinformationen umfasst, um die Registriervorrichtung anzuweisen, das Konfigurationspasswort zu erlangen, indem sie den mehrdimensionalen Code abtastet; und
wobei das Abtasten des mehrdimensionalen Codes eines drahtlosen Endgeräts durch die Registriervorrichtung, um Informationen des mehrdimensionalen Codes zu erlangen, umfasst:
Identifizieren des drahtlosen Endgeräts durch die Registriervorrichtung, indem die Vorrichtungskennung des drahtlosen Endgeräts verwendet wird, und Abtasten des mehrdimensionalen Codes des drahtlosen Endgeräts, um die Informationen des mehrdimensionalen Codes zu erlangen.

6. Verfahren zum Konfigurieren eines drahtlosen Endgeräts, umfassend:
Empfangen in dem drahtlosen Endgerät der Konfigurationsinformationen, die aufgrund eines Konfigurationspassworts verschlüsselt sind und von einer Registriervorrichtung durch eine drahtlose Zugangsvorrichtung, die der Registriervorrichtung zugeordnet ist, gesendet werden, wobei ein mehrdimensionaler Code in dem drahtlosen Endgerät eingestellt wird, sodass die Registriervorrichtung den mehrdimensionalen Code abtastet und die Informationen des mehrdimensionalen Codes erlangt, wobei die Informationen des mehrdimensionalen Codes das Konfigurationspasswort des drahtlosen Endgeräts umfassen; und
Entschlüsseln der verschlüsselten Konfigurationsinformationen durch das drahtlose Endgerät auf der Grundlage des Konfigurationspassworts, um die Konfigurationsinformationen zu erlangen, und Zugreifen auf die drahtlose Zugangsvorrichtung gemäß den Konfigurationsinformationen;
**dadurch gekennzeichnet, dass** das Entschlüsseln der verschlüsselten Konfigurationsinformationen durch das drahtlose Endgerät auf der Grundlage des Konfigurationspassworts, um die Konfigurationsinformationen zu erlangen, umfasst:
Erzeugen einer zweiten einmalig verwendeten Zufallszahl durch das drahtlose Endgerät, Senden der zweiten einmalig verwendeten Zufallszahl durch die drahtlose Zugangsvorrichtung an die Registriervorrichtung, und Empfangen einer ersten einmalig verwendeten Zufallszahl, die von der Registriervorrichtung durch die drahtlose Zugangsvorrichtung gesendet wird;
Erhalten eines ersten Schlüssels in dem drahtlosen Endgerät, indem ein erster voreingestellter Algorithmus verwendet wird, der auf der ersten einmalig verwendeten Zufallszahl, der zweiten einmalig verwendeten Zufallszahl und dem Konfigurationspasswort beruht; und
Entschlüsseln der verschlüsselten Konfigurationsinformationen durch das drahtlose Endgerät, indem der erste Schlüssel verwendet wird, um die Konfigurationsinformationen zu erlangen.

7. Verfahren nach Anspruch 6, wobei das Verfahren vor dem Empfangen in dem drahtlosen Endgerät der Konfigurationsinformationen, die aufgrund eines Konfigurationspassworts verschlüsselt sind und von einer Registriervorrichtung durch eine drahtlose Zugangsvorrichtung, die der Registriervorrichtung zugeordnet ist, gesendet werden, außerdem umfasst:
Senden einer Probeanfragenachricht durch die drahtlose Zugangsvorrichtung von dem drahtlosen Endgerät an die Registriervorrichtung, wobei die Probeanfragenachricht eine Vorrichtungskennung des drahtlosen Endgeräts und Befehlsinformationen umfasst, um die Registriervorrichtung anzuweisen, das Konfigurationspasswort zu erlangen, indem sie den mehrdimensionalen Code abtastet.

8. Registriervorrichtung zum Konfigurieren eines drahtlosen Endgeräts, umfassend:
ein Abtastmodul, das konfiguriert ist, um einen mehrdimensionalen Code des drahtlosen Endgeräts abzutasten, um Informationen des mehrdimensionalen Codes zu erlangen, wobei die Informationen des mehrdimensionalen Codes ein Konfigurationspasswort des drahtlosen Endgeräts umfassen; und
ein Modul zum Verschlüsseln von Konfigurationsinformationen, das konfiguriert ist, um die Konfigurationsinformationen auf der Grundlage des Konfigurationspassworts zu verschlüsseln und um die verschlüsselten Konfigurationsinformationen durch eine drahtlose Zugangsvorrichtung, die der Registriervorrichtung zugeordnet ist, an das drahtlose Endgerät zu senden, sodass das drahtlose Endgerät gemäß den Konfigurationsinformationen auf die drahtlose Zugangsvorrichtung zugreift;
**dadurch gekennzeichnet, dass** das Modul zum Verschlüsseln von Konfigurationsinformationen speziell konfiguriert ist zum:
Erzeugen einer ersten einmalig verwendeten Zufallszahl, Senden der ersten einmalig verwendeten Zufallszahl durch die drahtlose Zugangsvorrichtung an das drahtlose Endgerät, und Empfangen einer zweiten einmalig verwendeten Zufallszahl, die von dem drahtlosen Endgerät durch die drahtlose Zugangsvorrichtung gesendet wird;
Erhalten eines ersten Schlüssels, indem ein erster voreingestellter Algorithmus verwendet wird, der auf der ersten einmalig verwendeten Zufallszahl, der zweiten einmalig verwendeten Zufallszahl und dem Konfigurationspasswort beruht; und
Verschlüsseln der Konfigurationsinformationen, indem der erste Schlüssel verwendet wird, und Senden der verschlüsselten Konfigurationsinformationen durch die drahtlose Zugangsvorrichtung an das drahtlose Endgerät.

9. Vorrichtung nach Anspruch 8, wobei die Vorrichtung außerdem umfasst:
ein Anfrageempfangsmodul, das konfiguriert ist, um, bevor das Abtastmodul den mehrdimensionalen Code des drahtlosen Endgeräts abtastet, um die Informationen des mehrdimensionalen Codes zu erlangen, eine Probeanfragenachricht zu empfangen, die von dem drahtlosen Endgerät durch die drahtlose Zugangsvorrichtung gesendet wird, wobei die Probeanfragenachricht eine Vorrichtungskennung des drahtlosen Endgeräts und Befehlsinformationen umfasst, um die Registriervorrichtung anzuweisen, das Konfigurationspasswort zu erlangen, indem sie den mehrdimensionalen Code abtastet; und
ein Identifizierungsmodul, das konfiguriert ist, um das drahtlose Endgerät zu identifizieren, indem die Vorrichtungskennung des drahtlosen Endgeräts verwendet wird, und um den mehrdimensionalen Code des drahtlosen Endgeräts abzutasten, um die Informationen des mehrdimensionalen Codes zu erlangen.

10. Drahtloses Endgerät, umfassend:
ein Informationsempfangsmodul, das konfiguriert ist, um die Konfigurationsinformationen zu empfangen, die auf der Grundlage eines Konfigurationspassworts verschlüsselt wurden und die von einer Registriervorrichtung durch eine drahtlose Zugangsvorrichtung, die der Registriervorrichtung zugeordnet ist, gesendet wurden, wobei ein mehrdimensionaler Code in dem drahtlosen Endgerät eingestellt wird, sodass die Registriervorrichtung den mehrdimensionalen Code abtastet und die Informationen des mehrdimensionalen Codes erlangt, wobei die Informationen des mehrdimensionalen Codes das Konfigurationspasswort des drahtlosen Endgeräts umfassen;
ein Modul zum Entschlüsseln von Konfigurationsinformationen, das konfiguriert ist, um die verschlüsselten Konfigurationsinformationen auf der Grundlage des Konfigurationspassworts zu entschlüsseln, um die Konfigurationsinformationen zu erlangen; und
ein Zugangsmodul, das konfiguriert ist, um gemäß den Konfigurationsinformationen auf die drahtlose Zugangsvorrichtung zuzugreifen;
**dadurch gekennzeichnet, dass** das Modul zum Entschlüsseln von Konfigurationsinformationen speziell konfiguriert ist zum:
Erzeugen einer zweiten einmalig verwendeten Zufallszahl, Senden der zweiten einmalig verwendeten Zufallszahl durch die drahtlose Zugangsvorrichtung an die Registriervorrichtung, und Empfangen einer ersten einmalig verwendeten Zufallszahl, die von der Registriervorrichtung durch die drahtlose Zugangsvorrichtung gesendet wird;
Erhalten eines ersten Schlüssels, indem ein erster voreingestellter Algorithmus verwendet wird, der auf der ersten einmalig verwendeten Zufallszahl, der zweiten einmalig verwendeten Zufallszahl und dem Konfigurationspasswort beruht; und
Entschlüsseln der verschlüsselten Konfigurationsinformationen, indem der erste Schlüssel verwendet wird, um die Konfigurationsinformationen zu erlangen.

11. Drahtloses Endgerät nach Anspruch 10, wobei das drahtlose Endgerät außerdem umfasst:
ein Nachrichtensendemodul, das konfiguriert ist, um eine Probeanfragenachricht durch die drahtlose Zugangsvorrichtung an die Registriervorrichtung zu senden, bevor das Informationsempfangsmodul die Konfigurationsinformationen empfängt, die auf der Grundlage des Konfigurationspassworts verschlüsselt wurden und die von der Registriervorrichtung durch die drahtlose Zugangsvorrichtung, die der Registriervorrichtung zugeordnet ist, gesendet wurden, wobei die Probeanfragenachricht eine Vorrichtungskennung des drahtlosen Endgeräts und Befehlsinformationen umfasst, um die Registriervorrichtung anzuweisen, das Konfigurationspasswort zu erlangen, indem sie den mehrdimensionalen Code abtastet.

## Revendications

1. Procédé de configuration de terminal sans fil, comprenant :
le balayage, par un appareil d'enregistrement, d'un code multidimensionnel d'un terminal sans fil pour acquérir des informations de code multidimensionnel, dans lequel les informations de code multidimensionnel comprennent un mot de passe de configuration du terminal sans fil ; et
le cryptage, par l'appareil d'enregistrement, d'informations de configuration en fonction du mot de passe de configuration, et l'envoi des informations de configuration cryptées au terminal sans fil au moyen d'un dispositif d'accès sans fil associé à l'appareil d'enregistrement, de telle sorte que le terminal sans fil accède au dispositif d'accès sans fil conformément aux informations de configuration ;
**caractérisé en ce que** le cryptage, par l'appareil d'enregistrement, d'informations de configuration en fonction du mot de passe de configuration, et l'envoi des informations de configuration cryptées au terminal sans fil au moyen d'un dispositif d'accès sans fil associé à l'appareil d'enregistrement comprennent :
la génération, par l'appareil d'enregistrement, d'un premier nonce aléatoire, l'envoi du premier nonce aléatoire au terminal sans fil par le biais du dispositif d'accès sans fil, et la réception d'un second nonce aléatoire envoyé par le terminal sans fil par le biais du dispositif d'accès sans fil ;
l'obtention, par l'appareil d'enregistrement, d'une première clé en utilisant un premier algorithme prédéfini basé sur le premier nonce aléatoire, le second nonce aléatoire et le mot de passe de configuration ; et
le cryptage, par l'appareil d'enregistrement, des informations de configuration en utilisant la première clé, et l'envoi des informations de configuration cryptées au terminal sans fil par le biais du dispositif d'accès sans fil.

2. Procédé selon la revendication 1, dans lequel l'appareil d'enregistrement et le dispositif d'accès sans fil sont intégrés séparément dans deux dispositifs indépendants, et le dispositif d'accès sans fil est un point d'accès sans fil dans un réseau local sans fil basé sur une infrastructure.

3. Procédé selon la revendication 1, dans lequel l'appareil d'enregistrement est intégré dans le dispositif d'accès sans fil, et le dispositif d'accès sans fil est un point d'accès sans fil dans un réseau local sans fil basé sur une infrastructure.

4. Procédé selon la revendication 1, dans lequel l'appareil d'enregistrement est intégré dans le dispositif d'accès sans fil, le dispositif d'accès sans fil est un propriétaire de groupe dans un réseau local sans fil non basé sur une infrastructure, et le terminal sans fil est un client dans le réseau local sans fil non basé sur une infrastructure.

5. Procédé selon l'une quelconque des revendications 1 à 4, le procédé comprenant en outre, avant le balayage, par un appareil d'enregistrement, d'un code multidimensionnel d'un terminal sans fil pour acquérir des informations de code multidimensionnel :
la réception, par l'appareil d'enregistrement, d'un message de demande de sondage envoyé par le terminal sans fil par le biais du dispositif d'accès sans fil, dans lequel le message de demande de sondage comprend un identifiant de dispositif du terminal sans fil et des informations d'instructions pour ordonner à l'appareil d'enregistrement d'acquérir le mot de passe de configuration en balayant le code multidimensionnel ; et
le balayage, par un appareil d'enregistrement, d'un code multidimensionnel d'un terminal sans fil pour acquérir des informations de code multidimensionnel comprend : l'identification, par l'appareil d'enregistrement, du terminal sans fil en utilisant l'identifiant de dispositif du terminal sans fil, et le balayage du code multidimensionnel du terminal sans fil pour acquérir les informations de code multidimensionnel.

6. Procédé de configuration de terminal sans fil, comprenant :
la réception, par un terminal sans fil, d'informations de configuration qui sont cryptées en fonction d'un mot de passe de configuration et envoyées par un appareil d'enregistrement par le biais d'un dispositif d'accès sans fil associé à l'appareil d'enregistrement, dans lequel un code multidimensionnel est établi dans le terminal sans fil, l'appareil d'enregistrement balayant le code multidimensionnel et acquérant des informations de code multidimensionnel, dans lequel les informations de code multidimensionnel comprennent le mot de passe de configuration du terminal sans fil ; et
le décryptage, par le terminal sans fil , des informations de configuration cryptées en fonction du mot de passe de configuration pour acquérir des informations de configuration, et l'accès au dispositif d'accès sans fil conformément aux informations de configuration ;
**caractérisé en ce que** le décryptage, par le terminal sans fil, des informations de configuration cryptées en fonction du mot de passe de configuration pour acquérir des informations de configuration comprend :
la génération, par le terminal sans fil, d'un second nonce aléatoire, l'envoi du second nonce aléatoire à l'appareil d'enregistrement par le biais du dispositif d'accès sans fil, et la réception d'un premier nonce aléatoire qui est envoyé par l'appareil d'enregistrement par le biais du dispositif d'accès sans fil ;
l'obtention, par le terminal sans fil, d'une première clé en utilisant un premier algorithme prédéfini basé sur le premier nonce aléatoire, le second nonce aléatoire et le mot de passe de configuration ; et
le décryptage, par le terminal sans fil, des informations de configuration cryptées en utilisant la première clé, pour acquérir les informations de configuration.

7. Procédé selon la revendication 6, le procédé comprenant en outre, avant la réception, par un terminal sans fil, d'informations de configuration qui sont cryptées en fonction d'un mot de passe de configuration et envoyées par un appareil d'enregistrement par le biais d'un dispositif d'accès sans fil associé à l'appareil d'enregistrement :
l'envoi, par le terminal sans fil, d'un message de demande de sondage à l'appareil d'enregistrement par le biais du dispositif d'accès sans fil, dans lequel le message de demande de sondage comprend un identifiant de dispositif du terminal sans fil et des informations d'instructions pour ordonner à l'appareil d'enregistrement d'acquérir le mot de passe de configuration en balayant le code multidimensionnel.

8. Appareil d'enregistrement pour configurer un terminal sans fil, comprenant :
un module de balayage, configuré pour balayer un code multidimensionnel du terminal sans fil pour acquérir des informations de code multidimensionnel, dans lequel les informations de code multidimensionnel comprennent un mot de passe de configuration du terminal sans fil ; et
un module de cryptage d'informations de configuration, configuré pour crypter des informations de configuration en fonction du mot de passe de configuration, et envoyer les informations de configuration cryptées au terminal sans fil par le biais d'un dispositif d'accès sans fil associé à l'appareil d'enregistrement, de telle sorte que le terminal sans fil accède au dispositif d'accès sans fil conformément aux informations de configuration ;
**caractérisé en ce que** le module de cryptage d'informations de configuration est configuré spécifiquement pour :
générer un premier nonce aléatoire, envoyer le premier nonce aléatoire au terminal sans fil par le biais du dispositif d'accès sans fil, et recevoir un second nonce aléatoire envoyé par le terminal sans fil par le biais du dispositif d'accès sans fil ;
obtenir une première clé en utilisant un premier algorithme prédéfini basé sur le premier nonce aléatoire, le second nonce aléatoire et le mot de passe de configuration ; et
crypter les informations de configuration en utilisant la première clé, et envoyer les informations de configuration cryptées au terminal sans fil par le biais du dispositif d'accès sans fil.

9. Appareil selon la revendication 8, l'appareil comprenant en outre :
un module de réception de demande, configuré pour recevoir, avant que le module de balayage balaye le code multidimensionnel du terminal sans fil pour acquérir les informations de code multidimensionnel, un message de demande de sondage envoyé par le terminal sans fil par le biais du dispositif d'accès sans fil, dans lequel le message de demande de sondage comprend un identifiant de dispositif du terminal sans fil et des informations d'instructions pour ordonner à l'appareil d'enregistrement d'acquérir le mot de passe de configuration en balayant le code multidimensionnel ; et
un module d'identification, configuré pour identifier le terminal sans fil en utilisant l'identifiant de dispositif du terminal sans fil, et balayer le code multidimensionnel du terminal sans fil pour acquérir les informations de code multidimensionnel.

10. Terminal sans fil, comprenant :
un module de réception d'informations, configuré pour recevoir des informations de configuration qui sont cryptées en fonction d'un mot de passe de configuration et envoyées par un appareil d'enregistrement par le biais d'un dispositif d'accès sans fil associé à l'appareil d'enregistrement, dans lequel un code multidimensionnel est établi dans le terminal sans fil, l'appareil d'enregistrement balayant le code multidimensionnel et acquérant des informations de code multidimensionnel, dans lequel les informations de code multidimensionnel comprennent le mot de passe de configuration du terminal sans fil ;
un module de décryptage d'informations de configuration, configuré pour décrypter les informations de configuration cryptées en fonction du mot de passe de configuration pour acquérir des informations de configuration; et
un module d'accès, configuré pour accéder au dispositif d'accès sans fil conformément aux informations de configuration ;
**caractérisé en ce que** le module de décryptage d'informations de configuration est configuré spécifiquement pour :
générer un second nonce aléatoire, envoyer le second nonce aléatoire à l'appareil d'enregistrement par le biais du dispositif d'accès, et recevoir un premier nonce aléatoire qui est envoyé par l'appareil d'enregistrement par le biais du dispositif d'accès sans fil ;
obtenir une première clé en utilisant un premier algorithme prédéfini basé sur le premier nonce aléatoire, le second nonce aléatoire et le mot de passe de configuration ; et
décrypter les informations de configuration cryptées en utilisant la première clé, pour acquérir les informations de configuration.

11. Terminal sans fil selon la revendication 10, le terminal sans fil comprenant en outre :
un module d'envoi de messages, configuré pour envoyer un message de demande de sondage à l'appareil d'enregistrement par le biais du dispositif d'accès sans fil avant que le module de réception d'informations reçoive les informations de configuration qui sont cryptées en fonction du mot de passe de configuration et envoyées par l'appareil d'enregistrement par le biais du dispositif d'accès sans fil associé à l'appareil d'enregistrement, dans lequel le message de demande de sondage comprend un identifiant de dispositif du terminal sans fil et des informations d'instructions pour ordonner à l'appareil d'enregistrement d'acquérir le mot de passe de configuration en balayant le code multidimensionnel.
